# EUROPÄISCHE PATENTSCHRIFT

(11) **EP 2 676 921 B1**
(45) Veröffentlichungstag und Bekanntmachung des Hinweises auf die Patenterteilung: **06.01.2016**
(21) Anmeldenummer: 13172957.6
(22) Anmeldetag: 20.06.2013
(51) Int. Cl.: B67C 3/28, F16K 3/08

(54) **Ventil für eine Getränkeabfüllanlage beziehungsweise ein Füllorgan**
Valve for a beverage filling system respectively for a filling head
Vanne pour une installation de remplissage de boissons respectivement pour un organe de remplissage

(30) Priorität: 20.06.2012 DE 102012105350
(43) Veröffentlichungstag der Anmeldung: 25.12.2013
(73) Patentinhaber: Krones AG, 93073 Neutraubling (DE)
(72) Erfinder: Angerer, Florian, 93073 Neutraubling (DE)
(74) Vertreter: Nordmeyer, Philipp Werner

(56) Entgegenhaltungen:
- WO-A1-2006/049842
- DE-A1- 2 114 952
- DE-C- 12 858
- DE-C- 613 282
- JP-A- H 111 294
- JP-A- 2011 246 146

## Beschreibung

### Technisches Gebiet

Die vorliegende Erfindung betrifft ein Ventil für eine Getränkeabfüllanlage, bevorzugt ein Ventil für ein Füllorgan einer Getränkeabfüllanlage, beispielsweise zum Schalten eines Produktstroms oder zum Schalten eines Gasstroms und/oder eines anderen Fluidstroms zum Spülen, Entlüften, Evakuieren, Vorspannen, Entlasten und/oder Reinigen eines Behälters oder des Füllorgans.

### Stand der Technik

In herkömmlichen Getränkeabfüllanlagen werden Ventile in unterschiedlichen Bereichen eingesetzt, um Fluidströme zu steuern. Insbesondere werden Ventile im Bereich des Füllorgans einer Getränkabfüllanlage beispielsweise als Produktventil zum Schalten des Produktstromes in den zu befüllenden Behälter vorgesehen. Weiterhin sind üblicherweise Ventile am Füllorgan für das Gasmanagement vorgesehen. So ist es beispielsweise beim Befüllen von Behältern mit karbonisierten Getränken üblich, den Behälter vor dem Befüllen mit einem Spanngas, beispielsweise CO₂, vorzuspannen, um ein übermäßiges Aufschäumen des abzufüllenden, karbonisierten Getränks beim Einfüllen in den Behälter zu vermeiden und entsprechend einen sicheren und definierten Abfüllvorgang bereitzustellen. Nach einem solchen Füllvorgang mit einem vorgespannten Behälter, insbesondere beim Befüllen mit einem karbonisierten Getränk, muss der Behälter dann wieder definiert entlastet werden, um dem Bruch des Behälters durch eine schlagartige Entlastung vorzubeugen und um ein unkontrollierbares Überschäumen beziehungsweise Herausspritzen des Getränks bei der Druckentlastung zu verhindern. Weiterhin ist es bekannt, den jeweiligen, mit Produkt zu befüllenden Behälter mit einem Spülgas vorzuspülen, um Luftsauerstoff aus dem Behälter zu verdrängen, um entsprechend die Haltbarkeit des abzufüllenden Produktes zu erhöhen.

Diese Vorgänge des Schaltens unterschiedlicher Produkt-, Gas- und Fluidströme in dem Füllorgan wurden bislang über Membranventile durchgeführt, welche pneumatisch geschaltet werden. Hierbei gibt eine elektronische Füllventilsteuerung ein elektrisches Signal aus, welches ein so genanntes Vorsteuerventil zur Durchschaltung bringt. Dieses Vorsteuerventil beaufschlagt dann das eigentliche Membranventil über entsprechende Druckluftleitungen mit Druckluft, um das Produkt, das Spanngas, das Spülgas, die Entlastung und andere Vorgänge im Füllorgan zu schalten. Entsprechend schließt oder öffnet das entsprechende Membranventil seinerseits dann auf Grundlage des über das Vorsteuerventil gesteuerten Druckluftdruckes den entsprechenden Produkt- beziehungsweise Gaskanal.

Die elektronische Steuereinheit und die jeweiligen Vorsteuerventile sind meist an einem zentralen Steuerungsturm des Füllerkarussells der Getränkeabfüllanlage vorgesehen.

Die Ansteuerung der jeweiligen Membranventile im Füllorgan mittels über die entsprechenden Pneumatikschläuche zugeführter Druckluft führt unter anderem aufgrund unterschiedlich langer Pneumatikschläuche zu unterschiedlichen Reaktionszeiten der Ventile. Aufgrund der Konstruktion beispielsweise eines Rundläuferfüllers finden zur Ansteuerung der Ventile in den unterschiedlichen Füllorganen unterschiedlich lange Pneumatikschläuche Anwendung, so dass entsprechend die über kürzere Schläuche angesteuerten Membranventile schneller schalten, als die über längere Schläuche angesteuerten Membranventile. Diese Schaltzeitvarianzen können zu Ungenauigkeiten beim Abfüllvorgang führen.

Darüber hinaus kann durch die Verwendung von Druckluft zur Ansteuerung der Membranventile entsprechend Druckluft in die Abfüllbereiche gelangen, was unter hygienischen Aspekten unerwünscht sein kann.

Das Bereitstellen von Druckluft zur Betätigung der pneumatischen Antriebe benötigt darüber hinaus vergleichsweise viel Energie. Daneben sind jeweils zwei Ventile, nämlich das eigentliche Membranventil sowie das zugeordnete Vorsteuerventil, zur Steuerung der jeweiligen Fluidflüsse vorhanden, wodurch die Fehleranfälligkeit steigt.

Mechanische Ventile mit einem Ventilkörper und einem in dem Ventilkörper aufgenommenen, rotierbaren Ventilküken, in welchem eine radiale Durchgangsbohrung zum Schalten eines Fluidstroms eingebracht ist, sind beispielsweise in der DE 1 527 229 U beschrieben.

In der DE 12 858 C ist ein Scheibenhahn mit Revolververschluss gemäß dem Oberbegriff des Anspruchs 1 offenbart.

Die DE 613 282 C zeigt eine Hahnsteuerung für Vakuumfüller.

Eine elektrohydraulische Verstellvorrichtung mit Hub- und/oder Senkventilen ist in der DE 21 14 952 A1 offenbart.

In der JPH 111 294 ist ein Füllventil vorgesehen.

Die JP 2011 246146 A zeigt ein Füllventil, das ein vorgegebenes Volumen zum Abfüllen bereitstellt.

### Darstellung der Erfindung

Ausgehend von diesem vorbekannten Stand der Technik ist es eine Aufgabe der vorliegenden Erfindung, ein Ventil für ein Füllorgan bereitzustellen, welches zu einem vereinfachten Aufbau einer Getränkeabfüllanlage führt.

Diese Aufgabe wird entsprechend durch ein Ventil mit den Merkmalen des Anspruchs 1 gelöst. Vorteilhafte Weiterbildungen ergeben sich aus den Unteransprüchen.

Entsprechend wird ein Ventil für eine Getränkeabfüllanlage, bevorzugt für ein Füllorgan einer Getränkeabfüllanlage, vorgeschlagen, umfassend einen Ventilkörper mit mindestens einem Eingangskanal und mindestens einem dem Eingangskanal zugeordneten Ausgangskanal, wobei ein Stellelement mit einem Durchlasskanal zur wahlweisen Herstellung einer Fluidverbindung zwischen dem Eingangskanal und dem Ausgangskanal um eine Rotationsachse rotierbar in dem Ventilkörper angeordnet ist, und das Stellelement alternativ in eine Neutralstellung rotierbar ist. Erfindungsgemäß erstreckt sich der Durchlasskanal parallel zu der Rotationsachse durch das Stellelement hindurch.

Durch die entsprechende Ausgestaltung des Ventils dahingehend, dass das Stellelement in unterschiedlichen Rotationspositionen unterschiedliche Schaltzustände des Ventils hervorrufen kann, ist eine Ansteuerung über eine aufwändige Pneumatik, so wie sie bei den Membranventilen des Standes der Technik notwendig war, nicht mehr erforderlich. Vielmehr kann das auf diese Weise bereitgestellte Ventil mittels einer einfachen elektrischen Ansteuerung, beispielsweise über einen Schrittmotor, einen Elektromotor oder einen Elektrozylinder, in die unterschiedlichen Rotationspositionen bewegt werden. Damit kann eine unmittelbare elektrische Ansteuerung der jeweiligen Medien- beziehungsweise Gasflüsse erreicht werden. Insbesondere kann auf diese Weise auf den herkömmlichen Aufbau auf Grundlage eines Vorsteuerventils und der nachgeschalteten Pneumatikleitung zum Aufbringen der Druckluft auf die jeweiligen Membranventile zur eigentlichen Produkt- beziehungsweise Gassteuerung verzichtet werden. Die jeweiligen Produkt- beziehungsweise Gasströme können vielmehr über die genannten elektrischen Ansteuerungsmittel unmittelbar mit dem Ventil gesteuert werden. Damit kann darüber hinaus der gesamte Aufbau der Getränkeabfüllanlage vereinfacht werden, da auf die Vorsteuerventile und die aufwändige Pneumatikverrohrung verzichtet werden kann.

Durch die Anordnung des Durchlasskanals parallel zur Rotationsachse ergibt sich dabei eine für den Einsatz in einem Füllorgan besonders bevorzugte Geometrie, bei welcher sich ein elektrischer Antrieb besonders bevorzugt anbringen lässt und sich damit einfach eine direkte elektrische Ansteuerung des Ventils in dem Füllorgan erreichen lässt. Die Geometrie erlaubt bevorzugt die Anordnung von Ventil und dessen Antrieb in einer flexiblen Weise, so dass dem sehr begrenzten Bauraum des Füllorgans Rechnung getragen werden kann.

Die jeweilige Ventilsteuervorrichtung kann entsprechend den elektrischen Antrieb, über welchen das beschriebene Ventil angesteuert wird, direkt ansprechen und so eine unmittelbare Öffnung beziehungsweise Schließung der jeweiligen Gas- beziehungsweise Medienkanäle erreichen. Damit können aufgrund des Verzichts auf die aus dem Stand der Technik bekannten, unterschiedlich langen Pneumatikschläuche auch Schaltzeitvarianzen reduziert beziehungsweise vollkommen vermieden werden, so dass die Schaltung der jeweiligen Fluide deutlich präzisiert wird.

Das auf diese Weise vorgeschlagene Ventil ist weiterhin besonders einfach in seinem technischen Aufbau, so dass ein zuverlässiger Betrieb auch bei hohen Drücken und hohen Schaltfrequenzen auch bei der Verwendung unter den rauen Bedingungen einer Getränkeabfüllanlage problemlos möglich ist, und, aufgrund des vorteilhaften Strömungsverhaltens innerhalb des Ventils, die Wartung und die besonders im Bereich der Abfüllung von Getränken wichtige Reinigung und Sterilisierung des Ventils problemlos möglich ist.

Mit dem vorgeschlagenen Aufbau wird auch erreicht, dass ein Gas- beziehungsweise Produktdurchtritt durch die entsprechenden Kanäle nur dann stattfindet, wenn das Stellelement mit dem Durchlasskanal entsprechend geschaltet ist. Eine zuverlässige Abdichtung in den jeweiligen geschlossenen Positionen der Kanäle kann so erreicht werden.

Erfindungsgemäß sind in dem Ventilkörper mindestens ein erster Eingangskanal mit einem diesem zugeordneten ersten Ausgangskanal und ein zweiter Eingangskanal mit einem diesem zugeordneten zweiten Ausgangskanal vorgesehen, wobei entweder der erste Eingangskanal mit dem ersten Ausgangskanal, oder der zweite Eingangskanal mit dem zweiten Ausgangskanal über den Durchlasskanal des Stellelementes miteinander in Fluidverbindung bringbar sind, oder aber das Stellelement in Neutralstellung alle Kanäle verschließt. Die auf diese Weise bereitgestellten, alternativen Schaltstellungen des Stellelements ermöglichen mittels eines einfachen Aufbaus des Ventils ein zuverlässiges Umschalten zwischen zwei Medien- oder Gasleitungen. Beispielsweise kann so zwischen einem Spanngaskanal zur Beaufschlagung des zu befüllenden Behälters mit Spanngas, und einem Entlüftungskanal zum nachfolgenden Ablassen des im Behälter vorherrschenden Überdruckes umgeschaltet werden, so dass eine Fehlfunktion dahingehend ausgeschlossen werden kann, dass das Spanngas bei gleichzeitig geöffneten Entlüftungskanal in den zu befüllenden Behälter strömt. Diese zuverlässige Alternativschaltung wird dann ausgebildet, wenn genau ein Durchlasskanal in dem Stellelement ausgebildet ist, welcher sich entsprechend parallel zur Rotationsachse des Stellelements erstreckt. Es versteht sich von selbst, dass auch noch weitere Paare an Eingangs- und Ausgangskanälen vorgesehen werden können - je nach Erfordernissen der jeweiligen Getränkeabfüllanlage.

Um ein zuverlässiges Umschalten zwischen unterschiedlichen Gas- und/oder Medienkanälen zu erreichen, umfasst der Ventilkörper die gleiche Anzahl an Eingangs- und Ausgangskanälen, die einander jeweils eindeutig zugeordnet sind. Mit anderen Worten ist jedem Eingangskanal genau ein Ausgangskanal zugeordnet, so dass eine eindeutige Zuordnung der Eingangskanäle zu den Ausgangskanälen erreicht wird.

Das rotationssymmetrische Stellelement ist bevorzugt als Zylinderscheibe ausgebildet, in welcher der Durchlasskanal parallel zu der Zylinderachse, aber exzentrisch zur Zylinderachse als Durchgangsbohrung eingebracht ist. Durch die Ausprägung des Stellelements als Zylinderscheibe wird, neben einer einfachen Reinigungsmöglichkeit, auch das Aufbringen eines entsprechenden Dichtelementes vereinfacht, welches entsprechend nur als Dichtungsscheibe ausgebildet sein muss, um dennoch eine zuverlässige Abdichtung der Eingangskanäle sowie der Ausgangskanäle in den jeweiligen Schaltpositionen zu erreichen.

Besonders bevorzugt ist entsprechend zur Ausbildung einer zuverlässigen Abdichtung der Neutralstellung beziehungsweise der der Anzahl der Eingangs- und Ausgangskanäle entsprechenden Schaltstellungen, das Stellelement über mindestens eine Dichtung gegenüber dem Ventilkörper abgedichtet.

In einer weiteren bevorzugten Ausprägung erstrecken sich mindestens ein Eingangskanal und mindestens ein Ausgangskanal parallel zur Rotationsachse beziehungsweise zur Zylinderachse des Stellelements, so dass der jeweilige Eingangskanal mit dem ihm zugeordneten Ausgangskanal und dem Durchlasskanal in dem Stellelement bei einer entsprechenden Rotationsstellung des Stellelementes einen durchgehenden, sich parallel zur Zylinderachse erstreckenden Kanal ausbilden.

In einer weiteren bevorzugten Ausführungsform ist im Ventilkörper mindestens ein mit jeweils einem Eingangskanal und/oder einem Ausgangskanal in Fluidverbindung stehender Anschlusskanal vorgesehen, wobei der mindestens eine Anschlusskanal unter einem Winkel zu dem jeweiligen Eingangskanal und/oder Ausgangskanal angeordnet ist. Durch den jeweiligen Anschlusskanal kann eine flexible Anschlussgeometrie bereitgestellt werden, mittels welcher das Ventil an die vom Füllorgan vorgegebene Geometrie angepasst werden kann, beispielsweise um die jeweiligen zuführenden und ableitenden Medienkanäle auf der gleichen Stirnfläche des Ventilkörpers anzuordnen. Auf diese Weise kann in einer Getränkeabfüllanlage ein Anschlussmuster erreicht werden, bei welchem auf umfangreiche Verrohrungen verzichtet werden kann, und entsprechend eine einfach zu reinigende Ausgestaltung des Ventils erreicht werden kann.

In einer bevorzugten Variante erstrecken sich die jeweiligen Anschlusskanäle im rechten Winkel zu den Eingangskanälen und Ausgangskanälen, um Bauraum einsparen zu können und um entsprechend den Anschlusskanal des Eingangskanals und den Anschlusskanal des Ausgangskanals an der gleichen Stirnfläche des Ventilkörpers aus dem Ventilkörper austreten zu lassen. Auf diese Weise lässt sich erreichen, dass ein einfacher Anschluss der jeweiligen Anschlusskanäle an die übrigen Komponenten des Füllorgans erreicht werden kann und beispielsweise bereits durch ein einfaches Aufschrauben auf einen, entsprechende Zuführ- und Abführkanäle tragenden Ventilträger eine vollständigen Verbindung des Ventils mit den anderen Komponenten des Füllorgans erreicht wird.

In einer weiteren bevorzugten Ausführungsform sind Rückstellmittel vorgesehen, welche das Stellelement in einen vordefinierten Zustand bringen, beispielsweise wenn der entsprechende Stellantrieb für das Stellelement ausfällt. Ein solches Rückstellmittel kann beispielsweise in Form einer mechanischen Spannfeder vorgesehen sein, welche das Stellelement beispielsweise in die Neutralstellung, in welcher alle Eingangskanäle durch das Stellelement verschlossen sind, rotiert. Ein anderer vordefinierter Zustand kann beispielsweise eine Position sein, in welcher ein Eingangskanal mit seinem ihm zugeordneten Ausgangskanal über den Durchlasskanal verbunden ist. Die jeweilige Stellung, in welche das Rückstellmittel das Stellelement rotiert, hängt vom jeweiligen Anwendungsfall ab. In einer Alternative zu einer mechanischen Spannfeder kann ein entsprechender Mechanismus auch über einen elektrischen Energiespeicher in Kombination mit einer Spannungsausfallerkennung erreicht werden, wobei bei einem Spannungsausfall, welcher zu einem Ausfall des jeweiligen elektrischen Antriebs für das Stellelement führt, das Stellelement mit Hilfe des elektrischen Energiespeichers in den vorgegebenen Zustand rotiert wird.

Die Anwendung eines entsprechenden Rückstellmittels ist besonders bei einem Produktventil oder einem Ventil, mittels welchem ein Behälter mit Gas beaufschlagt wird, von großer Bedeutung, um beim Ausfall bestimmter Anlagenkomponenten oder bei einem Stromausfall das Produkt beziehungsweise das Gas nicht unkontrolliert weiterströmen zu lassen.

Durch die Verwendung des entsprechend vorgeschlagenen Ventils, insbesondere in Kombination mit einem entsprechenden elektrischen Antrieb, kann weiterhin der benötigte Energiebedarf für den Betrieb der jeweiligen Ventile innerhalb einer Getränkeabfüllanlage deutlich gegenüber der Verwendung von Druckluft reduziert werden. Dies kann insbesondere auch dadurch erreicht werden, dass eine Stromabsenkung beziehungsweise ein Abschalten der jeweiligen Antriebe in den Endstellungen der jeweiligen Ventile durchgeführt wird. Mit anderen Worten sind die Antriebe stromlos geschaltet, wenn sich das Ventil in der jeweiligen, für den Schaltzustand notwendigen Position befindet.

Eine weitere Effizienzsteigerung kann dadurch erreicht werden, dass zwei nebeneinander liegende Ventile über den gleichen elektrischen Antrieb angesteuert werden und bevorzugt über das gleiche Rückstellmittel in eine Neutralstellung zurückbewegt werden. Bei feststehenden Schaltabfolgen kann durch eine entsprechende Rotationsorientierung der einzelnen Stellelemente relativ zueinander auf diese Weise eine zuverlässige und direkte Schaltung mit nur einem einzigen Antrieb erreicht werden.

Die oben genannte Aufgabe wird weiterhin durch ein Füllorgan einer Getränkeabfüllanlage zum Befüllen von Behältern gelöst, wobei das Füllorgan mindestens ein Ventil zum Steuern eines Produktstroms und/oder eines Gasstroms umfasst, wobei das Ventil in der vorstehend beschriebenen Weise ausgebildet ist.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine Seitenansicht eines Ventils für eine Getränkeabfüllanlage in einer schematischen Schnittdarstellung, bevorzugt für ein Füllorgan;
- Figur 2: eine schematische, geschnittene Draufsicht auf das in Figur 1 gezeigte Ventil; und
- Figur 3: ein schematisches Schaltschema für das vorgeschlagene Ventil.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

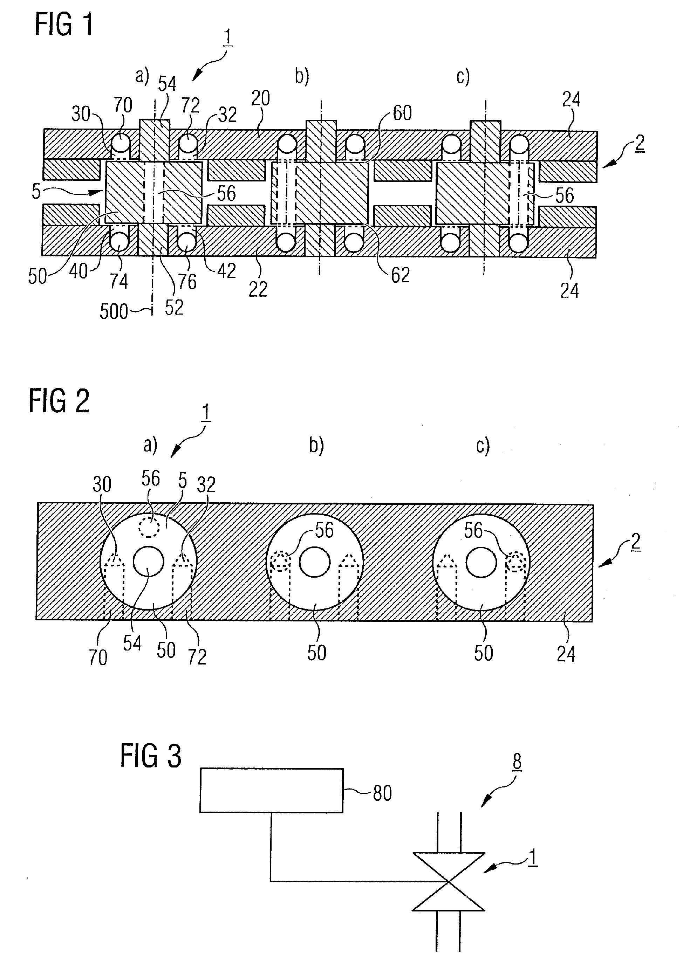

In Figur 1 ist eine schematische, geschnittene Seitenansicht und in Figur 2 eine entsprechende schematische, geschnittene Draufsicht auf das vorgeschlagene Ventil 1 gezeigt. In den Figuren 1 und 2 sind hier jeweils drei gleiche Ventile 1, bezeichnet als a), b), und c), nebeneinander angeordnet gezeigt, wobei die drei Ventile 1 in den Figuren 1 und 2 jeweils unterschiedliche Schaltzustände einnehmen. Exemplarisch wird im Folgenden jedoch hauptsächlich auf das in den Figuren 1a) und 2a) gezeigte Ventil 1 Bezug genommen.

Ein Ventilkörper 2 ist vorgesehen, welcher in dem in den Figuren 1 und 2 gezeigten Ausführungsbeispiel einen oberen Abschnitt 20 und einen unteren Abschnitt 22 aufweist. In dem Ventilkörper 2 sind im oberen Abschnitt 20 ein erster Eingangskanal 30 und ein zweiter Eingangskanal 32 vorgesehen, und im unteren Abschnitt 22 des Ventilkörpers 2 sind entsprechend den oberen Eingangskanälen 30, 32 zugeordnete erste und zweite Ausgangskanäle 40, 42 vorgesehen. Mit anderen Worten liegen sich die jeweiligen einander zugeordneten Eingangskanäle 30, 32 und Ausgangskanäle 40, 42 genau gegenüber, um mittels des nachfolgend beschriebenen Stellelements 5 miteinander in Fluidverbindung gebracht zu werden.

An den Eingangskanälen 30, 32 liegen die zu schaltenden Fluide an, beispielsweise Produkt oder Gas, und an den Ausgangskanälen 40, 42 liegen die dann geschalteten Fluide an.

Zwischen dem ersten Eingangskanal 30 und dem zweiten Eingangskanal 32 auf der einen Seite des Ventilkörpers 2, und dem ersten Ausgangskanal 40 und dem zweiten Ausgangskanal 42 auf der anderen Seite des Ventilkörpers 2 ist ein Stellelement 5 angeordnet, welches eine Rotationsachse 500 aufweist, um welche herum es rotierbar ist. Die Rotationsachse 500 des Stellelements 5 erstreckt sich parallel zu der Erstreckung der Eingangskanäle 30, 32 und der Ausgangskanäle 40, 42.

Das Stellelement 5 ist im gezeigten Ausführungsbeispiel als Zylinderscheibe 50 ausgebildet, welche über entsprechende Zapfen 52, 54 rotierbar in dem Ventilkörper 2 gehalten ist. Die Rotationsachse 500 des Stellelements 5 fällt damit mit der Zylinderachse der Zylinderscheibe 50 zusammen und das Stellelement 5 ist bezüglich der Rotationsachse 500 im Wesentlichen rotationssymmetrisch ausgebildet.

Das Stellelement 5 in Form der Zylinderscheibe 50 weist einen Durchlasskanal 56 auf, welcher beispielsweise in den Figuren 1b und 1c besonders gut zu erkennen ist. Der Durchlasskanal 56 erstreckt sich als gerade Durchlassbohrung durch die Zylinderscheibe 50 parallel zur Richtung der Rotationsachse 500 hindurch und liegt exzentrisch zur Rotationsachse 500.

Um eine einfache Rotation des Stellelements 5 in dem Ventilkörper zu ermöglichen, ist das Stellelement 5 bevorzugt rotationssymmetrisch ausgebildet. In einem hier nicht gezeigten Ausführungsbeispiel kann das Stellelement 5 aber auch nicht rotationssymmetrisch ausgebildet sein. Dadurch, dass sich der Durchlasskanal 56 in Richtung der Rotationsachse 500 durch das Stellelement 5 hindurch erstreckt, ist lediglich die Maßhaltigkeit der Stirnflächen des Stellelements 5 für die Abdichtung des Ventils von Bedeutung, nicht jedoch der Umfang des Stellelements 5. Im Unterschied zu den aus dem Stand der Technik bekannten Ventilküken ergibt sich damit eine einfachere Konstruktion des Ventils 1.

Durch entsprechende Rotation der Zylinderscheibe 50 können, wie in den Figuren 1 b beziehungsweise 2b gezeigt, der erste Eingangskanal 30 und der erste Ausgangskanal 40 über den Durchlasskanal 56 miteinander fluidleitend verbunden werden. Bei einer entsprechenden weiteren Rotation des rotationssymmetrischen Stellelementes 5, so wie in Figur 1c beziehungsweise Figur 2c gezeigt, kann der zweite Eingangskanal 32 mit dem zweiten Ausgangskanal 42 ebenfalls über den Durchlasskanal 56 fluidleitend verbunden werden. In diesen beiden Rotationsstellungen erstreckt sich der aus dem jeweiligen Eingangskanal 30, 32, Ausgangskanal 40, 42 sowie dem Durchlasskanal 56 ausgebildete, durchgehende und fluidleitende Kanal parallel zur Rotationsachse 500 des Stellelementes 5.

In der in den Figuren 1a und 2a gezeigten Position ist der Durchlasskanal 56 des Stellelementes 5 so geschaltet, dass weder der erste Eingangskanal 30 noch der zweite Eingangskanal 32 mit dem Durchlasskanal 56 verbunden sind, so dass sämtliche Eingangskanäle 30, 32 und Ausgangskanäle 40, 42 gegeneinander verschlossen sind. Diese Position des Stellelements 5 beziehungsweise des Ventils 1 wird auch als die Neutralstellung bezeichnet.

Um ein zuverlässiges Verschließen der Eingangskanäle 30, 32 beziehungsweise der Ausgangskanäle 40, 42 in der in den Figuren 1a und 2a gezeigten Neutralstellung des Ventils 1 zu erreichen, und um in den geöffneten Schaltstellungen eine zuverlässige Fluid- beziehungsweise Gasleitung zwischen den jeweiligen Eingangskanälen 30, 32 und den Ausgangskanälen 40, 42 zu erhalten, sind Dichtelemente 60, 62 an den jeweiligen Stirnseiten der Zylinderscheibe 50 des Stellelementes 5 vorgesehen, welche jeweils eine Abdichtung zwischen dem Stellelement 5 und den entsprechenden Bereichen des Ventilkörpers 2 bereitstellen.

Das Stellelement 5 wird bevorzugt mittels eines nicht gezeigten elektrischen Antriebes in die unterschiedlichen Rotationspositionen und damit in die unterschiedlichen Schaltstellungen des Ventils 1 bewegt. Hierzu kann beispielsweise an dem Zapfen 54 des Stellelements 5 ein Stellmotor, beispielsweise ein Schrittmotor, angeflanscht werden, oder eine entsprechende Rotationsbewegung kann über einen entsprechend exzentrisch angeschlagenen Elektrozylinder erreicht werden. Andere direkte elektrische Antriebe zur Rotation des Stellelements 5 sind ebenfalls denkbar.

Weiterhin kann ein Rückstellmittel vorgesehen sein, über welches das jeweilige Ventil 1 in eine vorgegebene Schaltstellung zurück rotiert wird, wenn der elektrische Antrieb für das Stellelement 5 aus irgendeinem Grund ausfällt. Insbesondere im Falle eines Spannungsverlustes beziehungsweise Stromausfalles kann das Stellelement 5 dann in eine vorgegebene Schaltstellung rotiert werden, beispielsweise in die in Figur 1 a gezeigte Neutralstellung. Dies ist von besonderer Bedeutung, wenn über die jeweiligen Eingangskanäle 30, 32 Gas oder Produkt in einen Behälter zugeführt wird, welches bei einem unkontrollierten Offenstehen des Ventils 1 im Falle eines Stromausfalles unkontrolliert weiter ausströmen würde.

Als Rückstellmittel kann beispielsweise eine mechanische Feder dienen, mittels welcher das Stellelement 5 in die Neutralstellung zurückgedreht wird. In einer Alternative kann hier auch ein elektrischer Stromspeicher, beispielsweise in Form eines Akkumulators, vorgesehen sein, welcher das Stellelement 5 im Falle eines Stromausfalles, welcher beispielsweise über eine Spannungsausfallerkennung in dem jeweiligen elektrischen Antrieb detektiert wird, gesteuert in die jeweilige Neutralstellung fährt.

In den Figuren 1 und 2 ist zu erkennen, dass die jeweiligen Eingangskanäle 30, 32 sowie Ausgangskanäle 40, 42 über entsprechende Anschlusskanäle 70, 72, 74, 76 an eine Stirnseite 24 des Ventilkörpers 2 geführt werden. Diese Ausprägung der Anschlusskanäle 70, 72, 74, 76 ist besonders in Figur 2 gut zu erkennen. Entsprechend sind die Anschlusskanäle 70, 72, 74, 76 im Wesentlichen senkrecht zu den Eingangskanälen 30, 32 und Ausgangskanälen 40, 42 angeordnet, derart, dass die durch die Anschlusskanäle 70, 72, 74, 76 definierten Anschlüsse an einer einzigen Stirnseite 24 des Ventilkörpers 2 angeordnet sind. Der Ventilkörper 2 kann entsprechend einfach mit einem Ventilträger mit entsprechenden Gas- und Medienführungen eines Füllorgans verbunden werden.

Figur 3 zeigt schematisch eine Steuerung, wobei das Ventil 1, welches in den Figuren 1 und 2 gezeigt ist, hier zum Schalten von Produkt in einem Füllorgan 8 und/oder zum Schalten von den entsprechenden Gasströmen in einem Füllorgan 8 vorgesehen ist. Eine entsprechende elektronische Füllventilsteuerung 80 ist vorgesehen, welche direkt und unmittelbar das Ventil 1 beziehungsweise dessen jeweiligen elektrischen Antrieb ansteuert. Auf diese Weise wird das Vorsehen aufwändiger Druckluftleitungen sowie eines Vorsteuerventils und die Bereitstellung großer Mengen an Druckluft vermieden, wodurch zum einen Energie eingespart werden kann und zum anderen Schaltzeitvarianzen reduziert beziehungsweise vermieden werden können. Darüber hinaus wird auch keine Druckluft mehr in einen Reinraum beziehungsweise Aseptikraum eines entsprechenden Aseptikfüllers eingetragen.

Neben den gezeigten ersten und zweiten Eingangskanälen 30, 32 beziehungsweise ersten und zweiten Ausgangskanälen 40, 42 können in weiteren Ausprägungen selbstverständlich weitere Eingangs- und Ausgangskanäle in der vorbeschriebenen Art in das Ventil 1 eingebracht werden, um weitere Schaltmöglichkeiten bereitzustellen. Bei dem angegebenen Ventil handelt es sich entsprechend um ein Mehrwegeventil, welches jedoch stets einen dedizierten Eingangskanal mit einem dedizierten, diesem zugeordneten Ausgangskanal verbindet. Dies ist beispielsweise bei den bekannten Dreiwegeventilen nicht der Fall, bei welchen ein Eingangskanal beispielsweise auf zwei unterschiedliche Ausgangskanäle geschaltet werden kann.

### Bezugszeichenliste

- 1: Ventil
- 2: Ventilkörper
- 20: oberer Abschnitt des Ventilkörpers
- 22: unterer Abschnitt des Ventilkörpers
- 24: Stirnseite
- 30: Eingangskanal
- 32: Eingangskanal
- 40: Ausgangskanal
- 42: Ausgangskanal
- 5: Stellelement
- 50: Zylinderscheibe
- 52, 54: Zapfen
- 56: Durchlasskanal
- 500: Rotationsachse
- 60, 62: Dichtelement
- 70,72: Anschlusskanal
- 74, 76: Anschlusskanal
- 8: Füllorgan
- 80: elektronische Füllventilsteuerung

## Patentansprüche

1. Ventil (1) für eine Getränkeabfüllanlage, bevorzugt für ein Füllorgan (8) einer Getränkeabfüllanlage, umfassend einen Ventilkörper (2) mit mindestens einem Eingangskanal (30) und mindestens einem dem Eingangskanal (30) zugeordneten Ausgangskanal (40), wobei ein Stellelement (5) mit einem Durchlasskanal (56) zur wahlweisen Herstellung einer Fluidverbindung zwischen dem Eingangskanal (30) und dem Ausgangskanal (40) um eine Rotationsachse (500) rotierbar in dem Ventilkörper (2) angeordnet ist, und das Stellelement (5) alternativ in eine Neutralstellung rotierbar ist, wobei sich der Durchlasskanal (56) parallel zu der Rotationsachse (500) durch das Stellelement (5) hindurch erstreckt,
**dadurch gekennzeichnet, dass**
in dem Ventilkörper (2) mindestens ein erster Eingangskanal (30) mit einem diesem zugeordneten ersten Ausgangskanal (40) und mindestens ein zweiter Eingangskanal (32) mit einem diesem zugeordneten zweiten Ausgangskanal (42) vorgesehen sind, wobei entweder der erste Eingangskanal mit dem ersten Ausgangskanal, oder der zweite Eingangskanal mit dem zweiten Ausgangskanal über den Durchlasskanal (56) des Stellelementes (5) miteinander in Fluidverbindung bringbar sind.

2. Ventil (1) gemäß Anspruch 1, **dadurch gekennzeichnet, dass** das Stellelement (5) eine eine Zylinderachse aufweisende Zylinderscheibe (50) umfasst, in welcher der Durchlasskanal (56) parallel zu der die Rotationsachse (500) ausbildenden Zylinderachse und exzentrisch zu der Zylinderachse angeordnet ist.

3. Ventil (1) gemäß Anspruch 1 oder 2, **dadurch gekennzeichnet, dass** das Stellelement (5) über mindestens einen sich parallel zur Rotationsachse (500) erstreckenden Zapfen (52, 54) in dem Ventilkörper (2) rotierbar gehalten ist.

4. Ventil (1) gemäß einem der vorstehenden Ansprüche, **dadurch gekennzeichnet, dass** das Stellelement (5) über mindestens eine Dichtung (60, 62) gegenüber dem Ventilkörper (2) abgedichtet ist.

5. Ventil (1) gemäß einem der vorstehenden Ansprüche, **dadurch gekennzeichnet, dass** mindestens ein in dem Ventilkörper (2) vorgesehener Anschlusskanal (70, 72, 74, 76) mit einem Eingangskanal (30, 32) und/oder einem Ausgangskanal (40, 42) in Fluidverbindung steht, wobei der Anschlusskanal (70, 72, 74, 76) unter einem Winkel zu dem jeweiligen Eingangskanal (30, 32) oder Ausgangskanal (40, 42) angeordnet ist, bevorzugt unter einem rechten Winkel.

6. Ventil (1) gemäß einem der vorstehenden Ansprüche, **dadurch gekennzeichnet, dass** der mindestens eine Eingangskanal (30, 32) und der mindestens eine Ausgangskanal (40, 42) parallel zur Rotationsachse (500) des Stellelementes (5) im Ventilkörper (2) ausgebildet sind.

7. Ventil (1) gemäß einem der vorstehenden Ansprüche, **dadurch gekennzeichnet, dass** das Stellelement (5) mit einem elektrischen Antrieb verbunden ist, bevorzugt mit einem Stellmotor, einem Schrittmotor oder einem Stellzylinder.

8. Ventil (1) gemäß Anspruch 7, **dadurch gekennzeichnet, dass** der elektrische Antrieb des Stellelementes (5) direkt mit einer elektronischen Füllventilsteuerung (80) verbunden ist.

9. Ventil (1) gemäß einem der vorstehenden Ansprüche, **dadurch gekennzeichnet, dass** ein Rückstellmittel zum Rückstellen des Stellelementes (5) in eine vorgegebene Schaltstellung, bevorzugt in eine Neutralstellung, vorgesehen ist.

10. Ventil (1) gemäß Anspruch 9, **dadurch gekennzeichnet, dass** das Rückstellmittel mittels einer mechanischen Feder und/oder eines elektrischen Energiespeichers und einer entsprechenden Ansteuerung bereitgestellt wird.

11. Ventil (1) gemäß einem der vorstehenden Ansprüche, **dadurch gekennzeichnet, dass** zwei nebeneinander liegende Ventile (1) über den gleichen Antrieb angesteuert werden und bevorzugt über das gleiche Rückstellmittel in eine Neutralstellung zurückbewegbar sind.

12. Füllorgan (8) einer Getränkeabfüllanlage zum Befüllen von Behältern, umfassend mindestens ein Ventil zum Steuern eines Produktstroms und/oder eines Gasstroms
**dadurch gekennzeichnet, dass**
das Ventil (1) nach einem der vorstehenden Ansprüche ausgebildet ist.

13. Füllorgan (8) gemäß Anspruch 12, **dadurch gekennzeichnet, dass** das Ventil (1) direkt mit einer elektronischen Füllventilsteuerung verbunden ist.

## Claims

1. Valve (1) for a beverage filling system, preferably for a filling element (8) of a beverage filling system, comprising a valve body (2) with at least one inlet channel (30) and at least one outlet channel (40) which is associated with the inlet channel (30), wherein an actuating element (5) with a passage channel (56) for selectively establishing a fluidic connection between the inlet channel (30) and the outlet channel (40) is arranged in the valve body (2) such that it can rotate about a rotation axis (500), and the actuating element (5) can alternatively be rotated into a neutral position, wherein the passage channel (56) extends through the actuating element (5) parallel to the rotation axis (500),
**characterized in that**
at least one first inlet channel (30) with a first outlet channel (40) which is associated with said first inlet channel, and at least one second inlet channel (32) with a second outlet channel (42) which is associated with the said second inlet channel are provided in the valve body (2), wherein either the first inlet channel and the first outlet channel or the second inlet channel and the second outlet channel can be brought into fluidic connection with one another by means of the passage channel (56) of the actuating element (5).

2. Valve (1) according to Claim 1, **characterized in that** the actuating element (5) comprises a cylinder disc (50) having a cylinder axis, in which cylinder disc the passage channel (56) is arranged parallel in relation to the cylinder axis which forms the rotation axis (500) and eccentrically in relation to the cylinder axis.

3. Valve (1) according to Claim 1 or 2, **characterized in that** the actuating element (5) is held, such that it can rotate in the valve body (2), by means of at least one pin (52, 54) which extends parallel in relation to the rotation axis (500).

4. Valve (1) according to one of the preceding claims, **characterized in that** the actuating element (5) is sealed off from the valve body (2) by means of at least one seal (60, 62).

5. Valve (1) according to one of the preceding claims, **characterized in that** at least one connection channel (70, 72, 74, 76) which is provided in the valve body (2) is in fluidic connection with an inlet channel (30, 32) and/or an outlet channel (40, 42), wherein the connection channel (70, 72, 74, 76) is arranged at an angle in relation to the respective inlet channel (30, 32) or outlet channel (40, 42), preferably at a right angle.

6. Valve (1) according to one of the preceding claims, **characterized in that** the at least one inlet channel (30, 32) and the at least one outlet channel (40, 42) are formed in the valve body (2) parallel in relation to the rotation axis (500) of the actuating element (5).

7. Valve (1) according to one of the preceding claims, **characterized in that** the actuating element (5) is connected to an electrical drive, preferably to an actuating motor, a stepper motor or an actuating cylinder.

8. Valve (1) according to Claim 7, **characterized in that** the electrical drive of the actuating element (5) is directly connected to an electronic filling valve controller (80).

9. Valve (1) according to one of the preceding claims, **characterized in that** a resetting means is provided for resetting the actuating element (5) to a prespecified switching position, preferably to a neutral position.

10. Valve (1) according to Claim 9, **characterized in that** the resetting means is provided by means of a mechanical spring and/or an electrical energy store and a corresponding control.

11. Valve (1) according to one of the preceding claims, **characterized in that** two valves (1) which are situated next to one another are controlled by means of the same drive, and preferably can be returned to a neutral position by means of the same resetting means.

12. Filling element (8) of a beverage filling system for filling containers, comprising at least one valve for controlling a flow of product and/or a flow of gas,
**characterized in that**
the valve (1) is formed as claimed in one of the preceding claims.

13. Filling element (8) according to Claim 12, **characterized in that** the valve (1) is directly connected to an electronic filling valve controller.

## Revendications

1. Soupape (1) pour une installation de remplissage de boisson, de préférence pour un organe de remplissage (8) d'une installation de remplissage de boisson, comprenant un corps de soupape (2) avec au moins un canal d'entrée (30) et au moins un canal de sortie (40) associé au canal d'entrée (30), un élément de réglage (5) avec un canal de passage (56) étant disposé dans le corps de soupape (2), de manière à pouvoir tourner autour d'un axe de rotation (500), pour l'établissement sélectif d'une liaison fluidique entre le canal d'entrée (30) et le canal de sortie (40), et l'élément de réglage (5) pouvant tourner en variante dans une position neutre, le canal de passage (56) s'étendant parallèlement à l'axe de rotation (500) à travers l'élément de réglage (5),
**caractérisée en ce**
**qu'**au moins un premier canal d'entrée (30) avec un premier canal de sortie (40) associé à celui-ci et au moins un deuxième canal d'entrée (32) avec un deuxième canal de sortie (42) associé à celui-ci sont prévus dans le corps de soupape (2), soit le premier canal d'entrée pouvant être amené en liaison fluidique avec le premier canal de sortie, soit le deuxième canal d'entrée pouvant être amené en liaison fluidique avec le deuxième canal de sortie par le biais du canal de passage (56) de l'élément de réglage (5).

2. Soupape (1) selon la revendication 1, **caractérisée en ce que** l'élément de réglage (5) comprend un disque de cylindre (50) présentant un axe de cylindre dans lequel disque de cylindre le canal de passage (56) est disposé parallèlement à l'axe de cylindre constituant l'axe de rotation (500) et de manière excentrique par rapport à l'axe de cylindre.

3. Soupape (1) selon la revendication 1 ou 2, **caractérisée en ce que** l'élément de réglage (5) est retenu de manière rotative dans le corps de soupape (2) par le biais d'au moins un tourillon (52, 54) s'étendant parallèlement à l'axe de rotation (500).

4. Soupape (1) selon l'une quelconque des revendications précédentes, **caractérisée en ce que** l'élément de réglage (5) est étanchéifié par le biais d'au moins un joint d'étanchéité (60, 62) par rapport au corps de soupape (2).

5. Soupape (1) selon l'une quelconque des revendications précédentes, **caractérisée en ce qu'**au moins un canal de raccordement (70, 72, 74, 76) prévu dans le corps de soupape (2) est en liaison fluidique avec un canal d'entrée (30, 32) et/ou un canal de sortie (40, 42), le canal de raccordement (70, 72, 74, 76) étant disposé suivant un angle par rapport au canal d'entrée respectif (30, 32) ou au canal de sortie respectif (40, 42), de préférence suivant un angle droit.

6. Soupape (1) selon l'une quelconque des revendications précédentes, **caractérisée en ce que** l'au moins un canal d'entrée (30, 32) et l'au moins un canal de sortie (40, 42) sont réalisés parallèlement à l'axe de rotation (500) de l'élément de réglage (5) dans le corps de soupape (2).

7. Soupape (1) selon l'une quelconque des revendications précédentes, **caractérisée en ce que** l'élément de réglage (5) est connecté à un entraînement électrique, de préférence à un moteur de réglage, un moteur pas à pas ou un cylindre de réglage.

8. Soupape (1) selon la revendication 7, **caractérisée en ce que** l'entraînement électrique de l'élément de réglage (5) est connecté directement à une commande électronique de soupape de remplissage (80).

9. Soupape (1) selon l'une quelconque des revendications précédentes, **caractérisée en ce qu'**un moyen de rappel pour le rappel de l'élément de réglage (5) dans une position de commutation prédéfinie, de préférence dans une position neutre, est prévu.

10. Soupape (1) selon la revendication 9, **caractérisée en ce que** le moyen de rappel est fourni au moyen d'un ressort mécanique et/ou d'un accumulateur d'énergie électrique et d'une commande correspondante.

11. Soupape (1) selon l'une quelconque des revendications précédentes, **caractérisée en ce que** deux soupapes adjacentes (1) sont commandées par le même entraînement et peuvent être ramenées dans une position neutre de préférence par le même moyen de rappel.

12. Organe de remplissage (8) d'une installation de remplissage de boisson pour le remplissage de récipients, comprenant au moins une soupape pour commander un flux de produits et/ou un flux de gaz,
**caractérisé en ce que**
la soupape (1) est réalisée selon l'une quelconque des revendications précédentes.

13. Organe de remplissage (8) selon la revendication 12, **caractérisé en ce que** la soupape (1) est connectée directement à une commande électronique de soupape de remplissage.
